# EUROPÄISCHE PATENTANMELDUNG

(11) **EP 1 271 020 A2**
(43) Veröffentlichungstag der Anmeldung: **02.01.2003**
(21) Anmeldenummer: 02011000.3
(22) Anmeldetag: 17.05.2002
(51) Int. Cl.: F16J 15/32

(54) **In einer Nut eines Verschlussdeckels liegender Abstreifring und Verfahren zum Einbringen des Abstreifringes in die Nut**

(30) Priorität: 20.06.2001 DE 10129734
(71) Anmelder: ThyssenKrupp Bilstein GmbH, 58256 Ennepetal (DE)
(72) Erfinder: Adrian, Adolf, 58256 Ennepetal (DE); Nevoigt, Andreas, Dr., 58135 Hagen (DE)

(57) **Zusammenfassung**

Um einen in einer umlaufenden, nach innen offenen Nut (9) eines Verschlussdeckels (2) liegenden Abstreifring (7) aus dehnbarem Werkstoff, insbesondere zum Abstreifen von Wasser oder Schmutz an Kolbenstangen (1), so zu gestalten, dass eine Befestigung mit geringem Aufwand ermöglicht wird und dass der Abstreifring (7) bereits vor der Montage der übrigen Stoßdämpferbauteile erfolgen kann, weist die Nut (9) einen sich nach außen erweiternden Querschnitt auf und ist der in der Nut (9) liegende äußere Umfangsbereich (8) des Abstreifringes (7) am Innendurchmesser (12) der Nut (9) axial gestaucht.

## Beschreibung

Die Erfindung betrifft einen in einer Nut eines Verschlussdeckels liegenden Abstreifring nach dem Oberbegriff des Anspruchs 1 sowie Verfahren zum Einbringen eines derartigen Abstreifringes in die Nut.

Abstreifringe aus dehnbarem Werkstoff, insbesondere zum Abstreifen von Wasser oder Schmutz an Kolbenstangen, die in einer Nut eines Verschlussdeckels liegen, sind aus der DE 34 43 370 C2 bekannt. Derartige Abstreifringe werden insbesondere bei Kolbenstangen für Stoßdämpfer eingesetzt. Diese Kolbenstangen sind einer starken Verschmutzung ausgesetzt. Trotzdem muss für eine hohe Lebensdauer sichergestellt werden, dass die Abstreifringe dichtend an der Kolbenstange anliegen.

Es gibt verschiedenste Befestigungsweisen, um derartige Abstreifringe an dem oberen Verschlussdeckel eines Stoßdämpfers anzubringen. Eine Befestigungsweise ist in der DE 34 43 370 C2 gezeigt. Hier wird der Verschlussdeckel mit einer radial und in einer Richtung axial offen ausgebildeten Nut eingesetzt. Dieses erfolgt über eine den äußeren Umfangsbereich des Abstreifringes radial und axial umfassende Manschette, die in die Bohrung der Nut eingepresst wird. Durch den Pressverband ist eine Lagefixierung der Manschette und damit des Abstreifers gewährleistet. Nachteilig bei dieser Ausbildung ergibt sich der zusätzliche Material- und Bearbeitungsaufwand für die Manschette.

Eine weitere Befestigungsausbildung ist aus der DE-PS 1 146 705 bekannt. Hier wird der Abstreifring, der ebenfalls in einer radial und in einer Richtung axial offenen Nut eingelegt ist, radial durch die Endbördelung des äußeren Stoßdämpferrohres fixiert. Nachteilig bei dieser Ausbildung ist der Abstreifring bis zur Endmontage lose und damit verlierbar. Darüber hinaus muss der Abstreifring vor der Endmontage des Stoßdämpfers exakt in die Nut eingelegt sein, damit er nicht krempelt oder exzentrisch fixiert wird.

Die DE 199 21 696 A1 zeigt eine Dichtung, die in eine nur nach innen offene umlaufende Nut eines Verschlussdeckels eingebracht wird. Bei derartigen Dichtungen ist es erforderlich, dass der eigentliche Dichtungskörper axial gut in der Nut geführt wird. Darüber hinaus muss der Dichtungskörper in der Nut befestigt sein oder radial vorgespannt werden, was zum einen eine hohe Bearbeitungsgenauigkeit der Nut erforderlich macht und zum anderen ein zusätzliches Bauteil erfordert.

Daraus ergibt sich die Aufgabe, den Abstreifring und die Nut im Verschlussdeckel so zu gestalten, dass eine Befestigung mit geringem Aufwand ermöglicht wird und dass der Abstreifring bereits vor der Montage der übrigen Stoßdämpferbauteile erfolgen kann.

Diese Aufgabe wird erfindungsgemäß mit den Merkmalen des Anspruchs 1 gelöst. In den Ansprüchen 2 bis 4 werden Verfahren zum Einbringen des Abstreifringes in die Nut eines Verschlussdeckels beschrieben.

Die Vorteile der Erfindung liegen darin, dass mit einfachen Mitteln und einem geringen Fertigungsaufwand eine Verbindung zwischen Verschlussdeckel und Abstreifring hergestellt werden kann, wobei vorteilhaft diese Verbindung bereits vor der Montage der übrigen Stoßdämpferteile erfolgen kann.

Ein Ausführungsbeispiel der Erfindung wird im Folgenden näher beschrieben. Es zeigen
Fig. 1 einen Querschnitt durch den Verschlussdeckel mit seinen Bauteilen,
Fig. 2 die vergrößerte Darstellung der Nut im Verschlussdeckel zur Aufnahme des Abstreifringes vor dem Befestigen des Abstreifringes,
Fig. 3 eine Darstellung gemäß Fig. 2 nach dem Einsetzen des Abstreifringes,
Fig. 4 eine alternative Ausbildung entsprechend Fig. 2 und
Fig. 5 die entsprechende Darstellung gemäß Fig. 3.

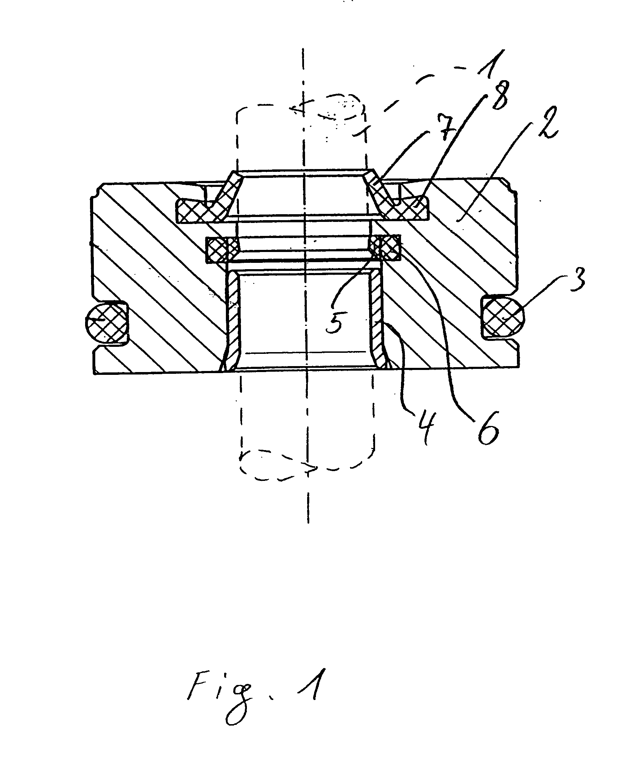

Der Austritt der Kolbenstange 1 aus dem Arbeitsraum eines Stoßdämpfers erfolgt häufig durch einen das offene Ende des Stoßdämpfers verschließenden Verschlussdeckel 2. Fig. 1 zeigt einen derartigen Verschlussdeckel 2. Der Verschlussdeckel 2 ist an seinem Außenumfang über eine Dichtung 3 gegen das nicht dargestellte äußere Stoßdämpferrohr abgedichtet. Die Befestigung des Verschlussdeckels 2 am äußeren Stoßdämpferrohr kann in verschiedener Weise gestaltet sein.

Der Verschlussdeckel 2 trägt verschiedene Bauteile zum gleitenden Führen und Abdichten der oszillierend durchtretenden Kolbenstange 1. Diese Bauteile sind im Bereich der Innenbohrung des Verschlussdeckels 2 angeordnet. Am unteren Ende des dargestellten Verschlussdeckels 2 ist eine Gleitbuchse 4 angeordnet, die die Kolbenstange 1 radial führt. Darüber befindet sich in einer radial nach innen offenen Nut ein Dichtring 5, der über einen Andrückring 6 die erforderliche radiale Vorspannung erhält.

Am oberen Ende ist ein Abstreifring 7 vorgesehen, der dazu dient, Wasser oder Schmutz vom außen liegenden Teil der Kolbenstange 1 dann abzustreifen, wenn die Kolbenstange 1 eine Eintauchbewegung in den Stoßdämpferkolben macht.

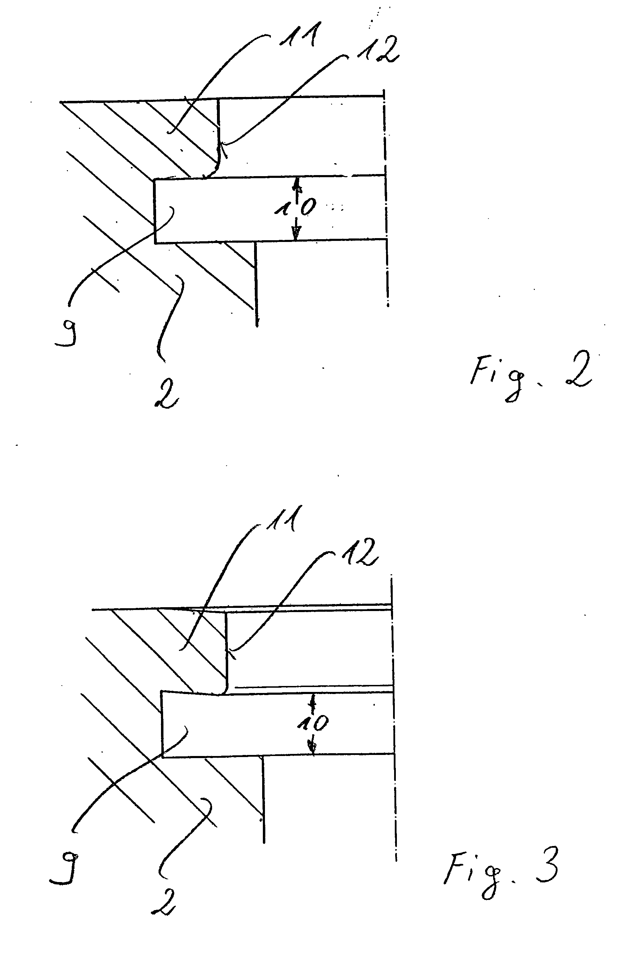

Der äußere Umfangsbereich 8 des Abstreifringes 7 liegt in einer nach innen offenen Nut 9 des Verschlussdeckels 2. Dieser Umfangsbereich 8 des Abstreifringes 7 weist vor der Montage eine etwa gleich bleibende Dicke auf. Die Nut 9 hat, wie in Fig. 2 gezeigt, eine etwa gleich bleibende Breite 10.

Der äußere Umfangsbereich 8 des in Fig. 2 nicht dargestellten Abstreifringes 7 weist eine gleich bleibende Dicke auf, die etwa der Breite 10 der Nut 9 entspricht. Nach dem Einsetzen des Abstreifringes 7 mit seinem äußeren Umfangsbereich 8 in die Nut 9 wird mit einem außen anzusetzenden Umformwerkzeug, beispielsweise mit einer Presse, der nach außen weisende Schenkel 11 der Nut 9 am Innendurchmesser 12 derartig verpresst, dass sich seine Breite 10 zum Innendurchmesser 12 hin verringert.

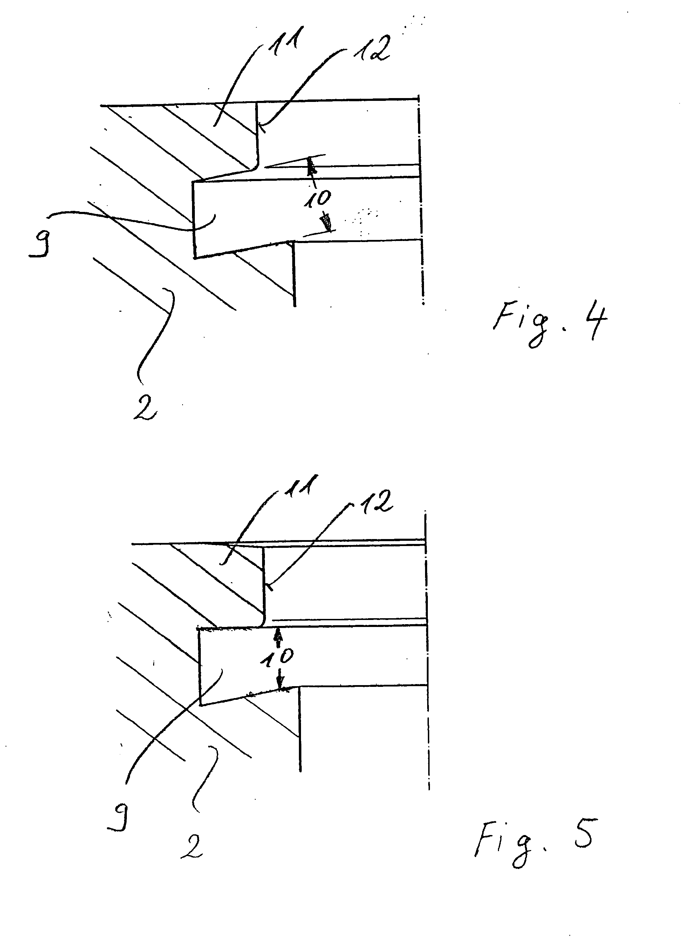

Der gleiche Umformvorgang erfolgt auch bei der Nutausbildung gemäß den Fig. 4 und 5.

Wenn es die Einsatzbedingungen für den Abstreifring 7 erfordern, dass dieser noch fester in der Nut 9 verpresst werden muss, können sowohl die Nut 9 als der äußere Umfangsbereich 8 des Abstreifringes 7 in ihrer ursprünglichen Form nach innen hin erweiternd bzw. verdickend ausgebildet sein. Bei einer Umformung des Schenkels 11 dahingehend, dass sich die Breite 10 der Nut 9 zum Innendurchmesser 12 hin verringert, wird dementsprechend der äußere Umfangsbereich 8 des Abstreifringes 7 stärker verpresst.

Es ist auch möglich, den äußeren Umfangsbereich 8 des Abstreifringes 7 derartig zu gestalten, dass er eine sich nach außen hin vergrößernde Dicke aufweist, wobei die maximale Dicke im Umfangsbereich 8 etwa der gleich bleibenden Breite 10 der Nut 9 entspricht. Der Festsitz des Abstreifringes 7 wird nach der Umformung des Schenkels 11 durch Formschluss und eine zusätzliche axiale Stauchung erreicht.

### Bezugszeichenliste

- 1.: Kolbenstange
- 2.: Verschlussdeckel
- 3.: Dichtung
- 4.: Gleitbuchse
- 5.: Dichtung
- 6.: Andrückring
- 7.: Abstreifring
- 8.: Umfangsbereich
- 9.: Nut
- 10.: Breite
- 11.: Schenkel
- 12.: Innendurchmesser

## Patentansprüche

1. In einer umlaufenden, nach innen offenen Nut (9) eines Verschlussdeckels (2) liegender Abstreifring (7) aus dehnbarem Werkstoff, insbesondere zum Abstreifen von Wasser oder Schmutz an Kolbenstangen (1), **dadurch gekennzeichnet, dass** die Nut (9) einen sich nach außen erweiternden Querschnitt aufweist und der in der Nut (9) liegende äußere Umfangsbereich (8) des Abstreifringes (7) am Innendurchmesser (12) der Nut (9) axial gestaucht ist.

2. Verfahren zum Einbringen eines Abstreifringes (7) in die Nut (9) eines Verschlussdeckels (2) nach Anspruch 1, **dadurch gekennzeichnet, dass** der in die Nut (9) einzulegende Umfangsbereich (8) des Abstreifringes (7) eine etwa gleich bleibende Dicke aufweist und in eine Nut (9) mit einem Querschnitt gleicher Breite (10) eingebracht wird und danach wenigstens ein Schenkel (11) der Nut (9) am Innendurchmesser (12), die Nutbreite verringernd umgeformt wird.

3. Verfahren zum Einbringen eines Abstreifringes (7) in die Nut (9) eines Verschlussdeckels (2) nach Anspruch 1, **dadurch gekennzeichnet, dass** der in die Nut (9) einzulegende Umfangsbereich (8) des Abstreifringes (7) eine Dicke aufweist und in eine Nut (9) mit einem sich zum Zentrum hin erweiternden Querschnitt eingebracht wird und danach wenigstens ein Schenkel (11) der Nut (9) am Innendurchmesser (12), die Nutbreite verringernd umgeformt wird.

4. Verfahren zum Einbringen eines Abstreifringes (7) in die Nut (9) eines Verschlussdeckels (2) nach Anspruch 1, **dadurch gekennzeichnet, dass** der in die Nut (9) einzulegende Umfangsbereich (8) des Abstreifringes (7) eine sich zum Zentrum hin verringernde Dicke aufweist und in eine Nut (9) mit einem Querschnitt gleicher Breite (10) eingebracht wird und danach wenigstens ein Schenkel (11) der Nut (9) am Innendurchmesser (12), die Nutbreite soweit verringernd umgeformt wird, dass eine Nut (9) mit einem sich zum Zentrum hin verringernden Querschnitt entsteht und dass die ursprüngliche maximale Dicke des Umfangsbereiches (8) des Abstreifringes (7) etwa der ursprünglichen Breite (10) der Nut (9) entspricht.
